# EUROPEAN PATENT APPLICATION

(11) **EP 2 816 755 A1**
(43) Date of publication of application: **24.12.2014**
(21) Application number: 12866699.7
(22) Date of filing: 28.06.2012
(51) Int. Cl.: H04L 9/08, H04W 4/04, H04W 12/04

(54) **ENCRYPTION COMMUNICATION SYSTEM, COMMUNICATION DEVICE, KEY DISTRIBUTION DEVICE, ENCRYPTION COMMUNICATION METHOD**

(30) Priority: 27.01.2012 JP 2012014978
(71) Applicant: Toyota Jidosha Kabushiki Kaisha, Toyota-shi, Aichi-ken, 471-8571 (JP); National University Corporation Yokohama National University, Yokohama-shi, Kanagawa 240-8501 (JP)
(72) Inventor: OGUMA, Hisashi, Tokyo 107-0052 (JP); MATSUMOTO, Tsutomu, Yokohama-shi Kanagawa 240-8501 (JP); HATA, Masato, Yokohama-shi Kanagawa 240-8501 (JP); YOSHIOKA, Katsunari, Yokohama-shi Kanagawa 240-8501 (JP)
(74) Representative: Smith, Samuel Leonard
(86) International application number: PCT/JP2012/066535
(87) International publication number: WO 2013/111364

(57) **Abstract**

A cryptographic communication system constituted by a first communication device, and a second communication device that stores a master key serving as an encryption key, the cryptographic communication system being characterized in that said first communication device has a common key storing unit configured to store a key pair constituted by a first key serving as a common key used to communicate with said second communication device and a second key obtained by encrypting said first key by using said master key held by said second communication device, and also has a common key transmitting unit configured to transmit said second key to said second communication device, and said second communication device has common key obtaining unit configured to receive said second key and obtaining said first key by decrypting said received second key by using said master key.

## Description

### [Technical Field]

The present invention relates to a key transmission technique employed in a common key cryptographic system.

### [Background Art]

Recently, road-to-vehicle communication techniques, in which a roadside communication device disposed on a roadside and an in-vehicle communication terminal installed in a vehicle exchange information by communicating with each other, are starting to become more widespread. A feature of road-to-vehicle communication is that a plurality of wireless communication devices use a common wireless transmission line, and it is therefore desirable that message authentication be performed to prevent information falsification, identity theft, and so on, and that cryptographic communication be performed to ensure that the information remains confidential.

A public key cryptographic system and a common key cryptographic system may be cited as representative systems for performing message authentication and cryptographic communication. An advantage of the public key cryptographic system is that when cryptographic communication is performed using public key cryptography, there is no need to share a single cryptographic key. However, the public key cryptographic system is disadvantaged in that, in comparison with the common key cryptographic system, the processing overhead is high and the processing speed is low. Road-to-vehicle communication is used to assist safe driving by collecting information relating to peripheral vehicles, and must therefore be performed in real time. Hence, the public key cryptographic system is not suited to road-to-vehicle communication.

On the other hand, when the common key cryptographic system is applied to road-to-vehicle communication in which simple many-to-many communication is performed, and different communication devices use identical keys, communication security cannot be guaranteed, and therefore each communication device must hold one key for each device with which communication is envisaged. For example, the roadside communication device must hold one key for each marketed in-vehicle communication device, and furthermore, keys must be added periodically. Hence, when a common key is shared in advance, high operational scalability cannot be achieved.

To solve this problem, a technique for sharing a key efficiently in a common key cryptographic system has been proposed. Non-Patent Document 1 describes a technique of transmitting a common key used for authentication between communication devices. In this technique, a key having a chain structure generated using a one-way function is used, and a key for decrypting a transmitted message is transmitted in a subsequently transmitted message. As a result, the communication devices can transmit keys while simultaneously transmitting messages with one another.

### [Citation List]

### [Patent Literature]

Non-Patent Document 1: Yih-Chun Hu and Kenneth P. Laberteaux, "STRONG VANET SECURITY ON A BUDGET", Embedded Security in Cars Conference, Nov. 2006

### [Summary of Invention]

A feature of the technique described in Non-Patent Document 1 is that there is no need to perform a special procedure for transmitting a key before communication is started. Since communication can be performed without both devices sharing a common key in advance, there is no need to manage keys corresponding to communication partners, and as a result, operational scalability is high. Since the keys have a chain structure, however, it is not possible to decrypt an entire message until a final message is received. In other words, responsiveness is lacking in immediacy, and therefore this technique is not suited to road-to-vehicle communication, which must be performed in real time.

In light of this background, there is demand for a message authentication method having a low processing overhead and high scalability for use during road-to-vehicle communication.

The present invention has been designed in consideration of the problems described above, and an object thereof is to provide a cryptographic communication system, a communication device, a key distribution device, and a cryptographic communication method with which a common key can be shared securely as required with an anonymous communication partner not determined in advance without sharing the common key in advance.

To achieve this object, in a cryptographic communication system according to the present invention, a common key is shared between communication devices using following means.

The cryptographic communication system according to the present invention is constituted by a first communication device, and a second communication device that stores a master key serving as an encryption key, wherein the first communication device has a common key storing unit configured to store a key pair constituted by a first key serving as a common key used to communicate with the second communication device and a second key obtained by encrypting the first key by using the master key held by the second communication device, and also has a common key transmitting unit configured to transmit the second key to the second communication device, and the second communication device has a common key obtaining unit configured to receive the second key and obtaining the first key by decrypting the received second key by using the master key.

The first communication device holds the common key used during communication and the key obtained by encrypting the common key using the master key held by a communication partner, and during communication, transmits only the encrypted key to the second communication device serving as the communication partner. The second communication device obtains the common key by decrypting the received key using its own master key. The second communication device need only hold the master key, and therefore the two communication devices can perform cryptographic communication using the common key without having to share the common key in advance. Even when the number of first communication devices increases, corresponding common keys do not have to be distributed to the second communication device, and therefore high operational scalability is achieved.

Further, the common key storing unit may store a plurality of the key pairs in relation to the second communication device, and during communication with the second communication device, the common key transmitting unit may transmit a different second key for each communication session.

The first communication device is capable of changing the key pair used during communication every time a communication session is terminated. According to this method, a different common key is used and discarded in each communication session, making key specification difficult. Note that as long as a series of communications can be delimited, a communication session may be started and terminated at any desired timings.

The cryptographic communication system according to the present invention may further include a key distribution device that transmits the key pair corresponding to the second communication device to the first communication device, wherein the key distribution device transmits the key pair corresponding to a second communication device existing within a predetermined distance from a location in which the first communication device receives the key pair.

The key pair corresponding to the second communication device must be distributed to the first communication device, and this may be achieved using the key distribution device. The key distribution device only distributes key pairs corresponding to second communication devices existing within a predetermined distance of the first communication device to the first communication device. The predetermined distance may be a maximum distance by which the first communication device is assumed to move from a distribution location, for example. By excluding faraway second communication devices with which communication is not planned, a volume of the keys distributed to the first communication device can be suppressed.

Further, the cryptographic communication system according to the present invention may be constituted by a plurality of the first communication devices and a plurality of the second communication devices, wherein the master key differs for each second communication device, and the key pair differs for each combination of the first communication device and the second communication device that communicate with each other.

A different key pair may be used for each combination of the first communication device and the second communication device, and a unique master key may be provided for each second communication device. In so doing, a single common key is determined for each combination of communication devices, and therefore communication security can be assured.

Further, the second communication device may transmit the second key to the first communication device together with a transmission message, and the first communication device may receive the message when the received second key is stored in the common key storing unit.

The second key is determined uniquely for each combination of the first communication device and the second communication device, and may therefore be used by being attached to a message as an address display specifying the communication destination. Furthermore, the second key is encrypted, and therefore the destination cannot be specified externally. Moreover, the transmitted second key is changed for each communication session, making it difficult to track the second key externally.

Further, the first communication device and the second communication device may perform message authentication using the first key. By creating a digest from the message using the common key and performing verification on the reception side, it is possible to confirm on both sides that the message and the communication partner are legitimate.

Further, the first communication device may be an in-vehicle communication device, and the second communication device may be a roadside communication device. The cryptographic communication system according to the present invention is preferably applied to a road-to-vehicle communication system in which the first communication device moves.

According to the present invention, it is possible to provide a cryptographic communication system, a communication device, a key distribution device, and a cryptographic communication method with which a common key can be shared securely as required with an anonymous communication partner not determined in advance without sharing the common key in advance.

### [Brief Description of Drawings]

[FIG. 1]

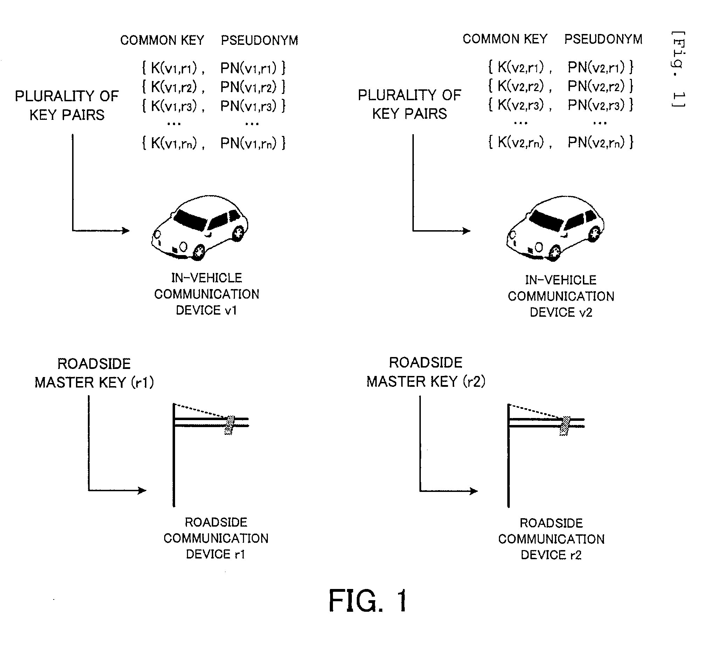

   Fig. 1 is a view illustrating keys held by a vehicle and a roadside communication device according to a first embodiment;
[FIG. 2]

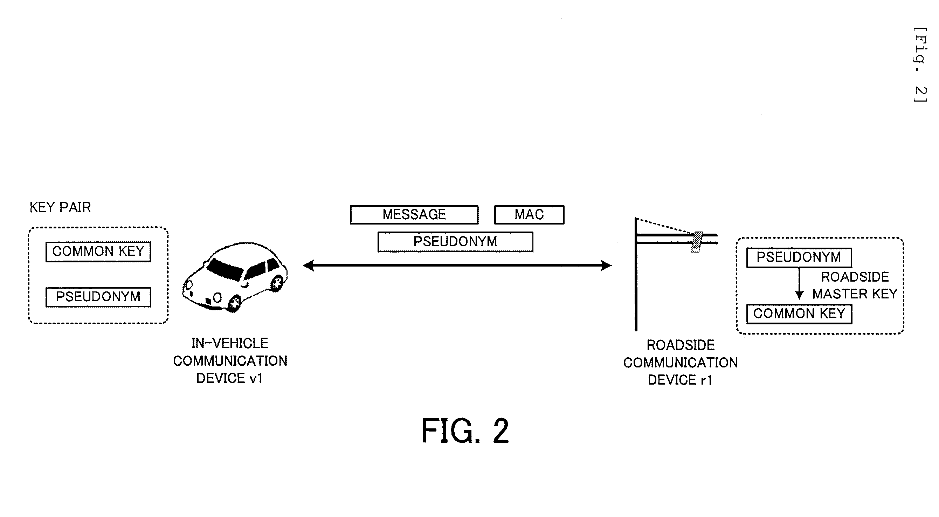

   Fig. 2 is a view illustrating data transmitted between the roadside and the vehicle according to the first embodiment;
[FIG. 3]

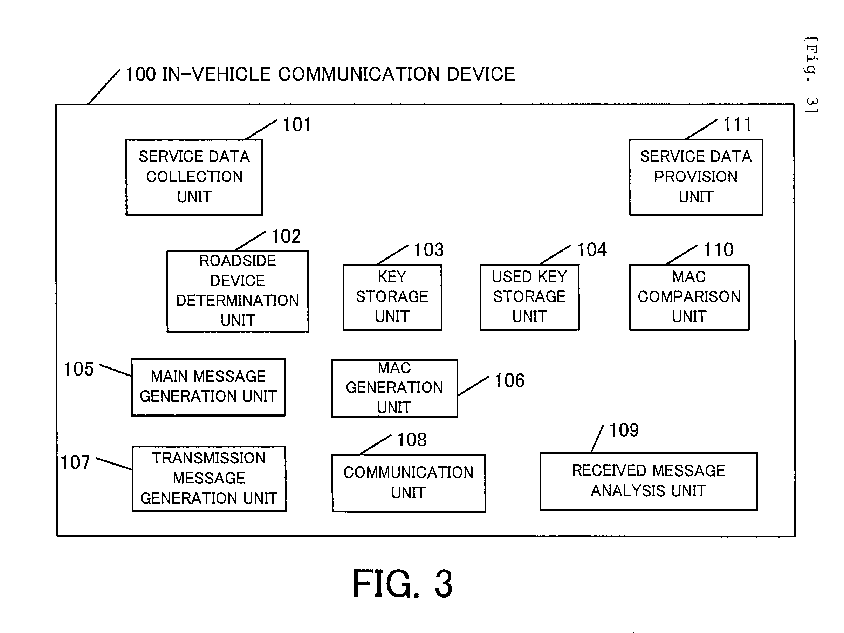

   Fig. 3 is a view showing a system configuration of an in-vehicle communication device according to the first embodiment;
[FIG. 4]

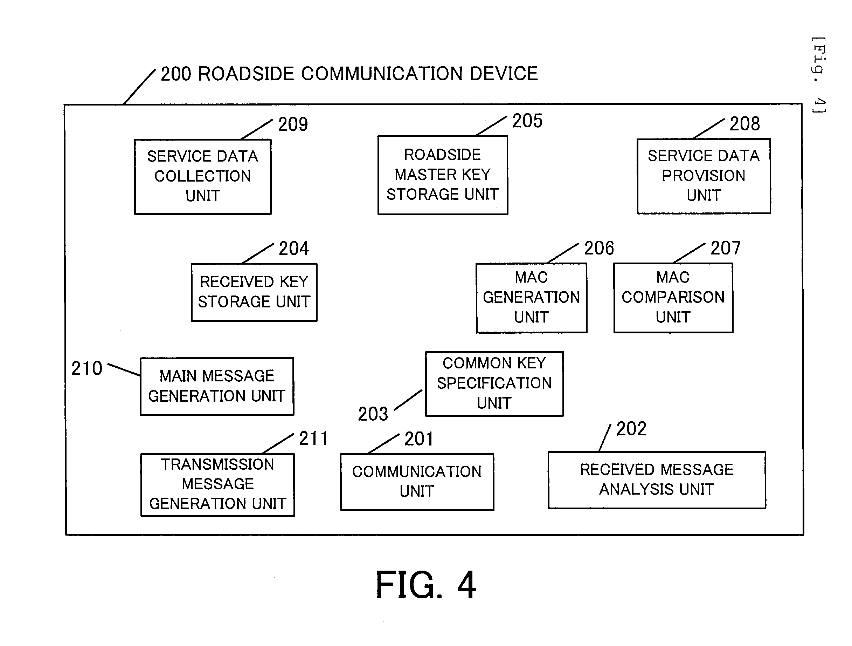

   Fig. 4 is a view showing a system configuration of the roadside communication device according to the first embodiment;
[FIG. 5]

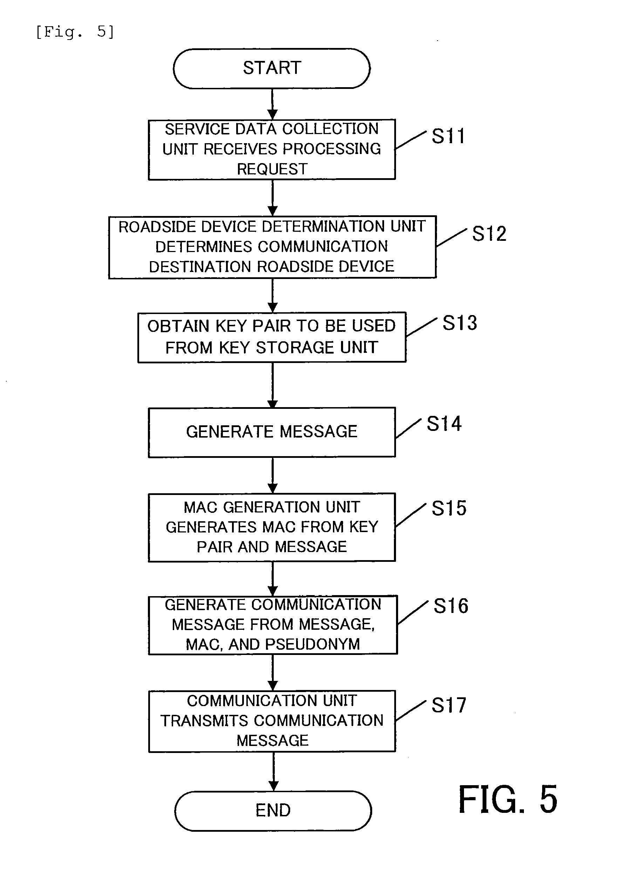

   Fig. 5 is a flowchart showing transmission processing performed by the in-vehicle communication device according to the first embodiment;
[FIG. 6]

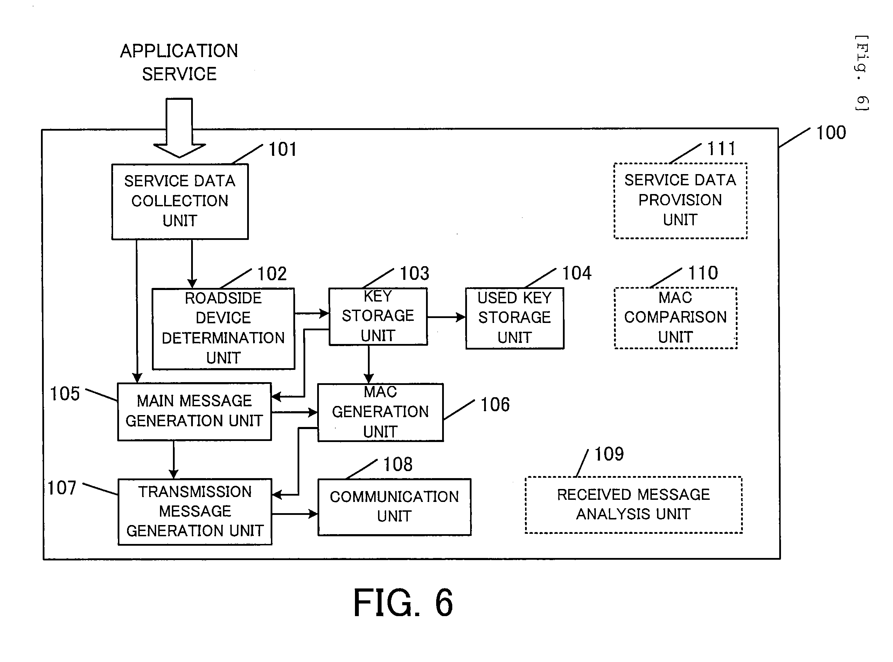

   Fig. 6 is a view showing a flow of transmission data in the in-vehicle communication device according to the first embodiment;
[FIG. 7]

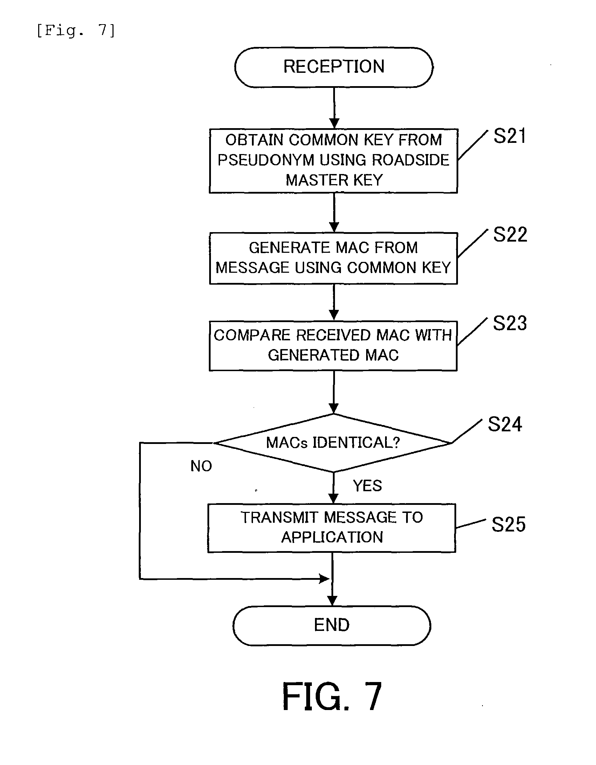

   Fig. 7 is a flowchart showing reception processing performed by the roadside communication device according to the first embodiment;
[FIG. 8]

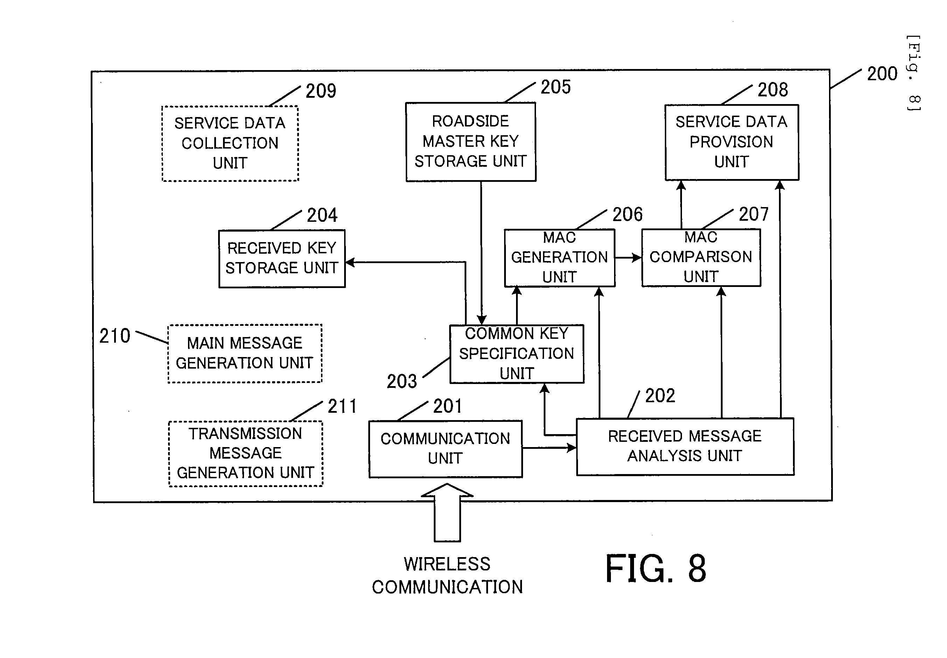

   Fig. 8 is a view showing a flow of reception data in the roadside communication device according to the first embodiment;
[FIG. 9]

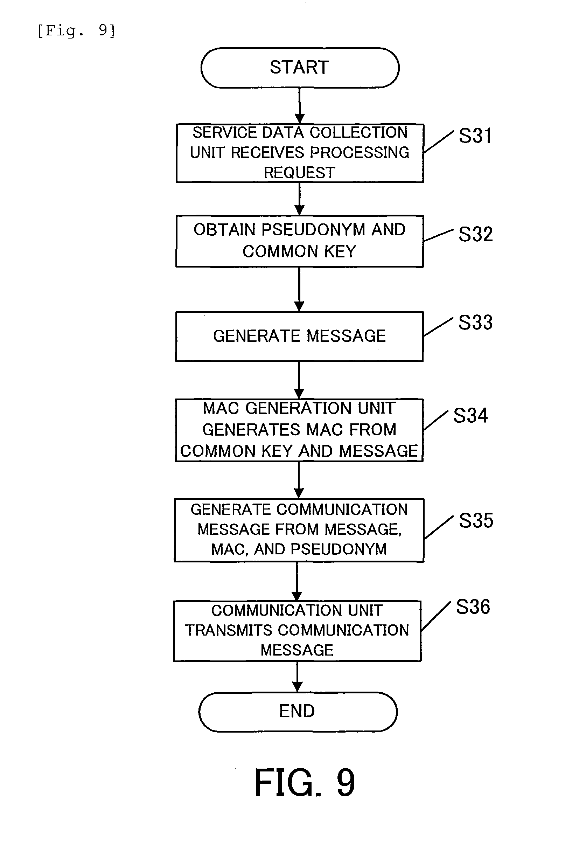

   Fig. 9 is a flowchart showing transmission processing performed by the roadside communication device according to the first embodiment;
[FIG. 10]

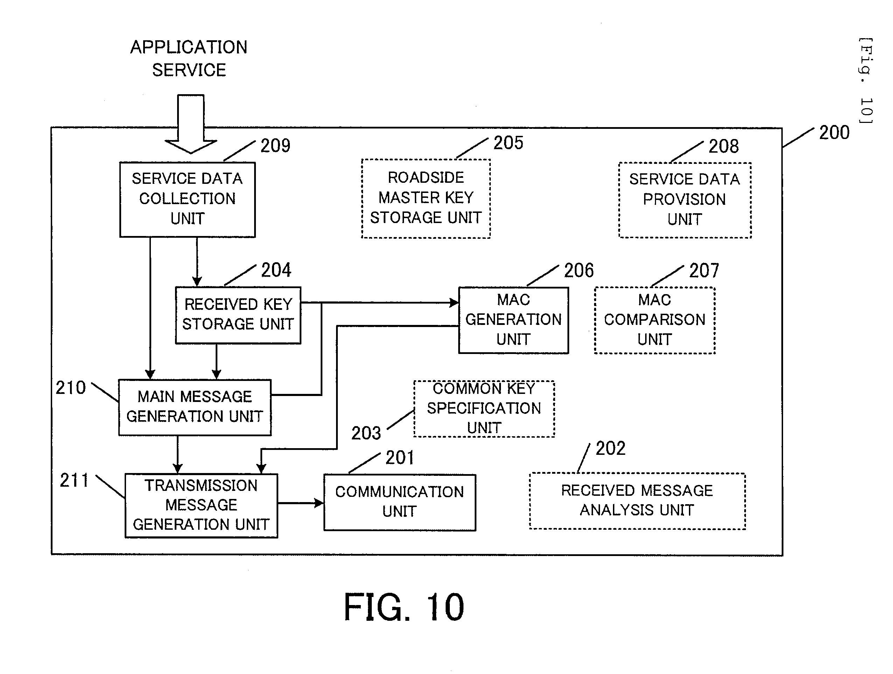

   Fig. 10 is a view showing a flow of transmission data in the roadside communication device according to the first embodiment;
[FIG. 11]

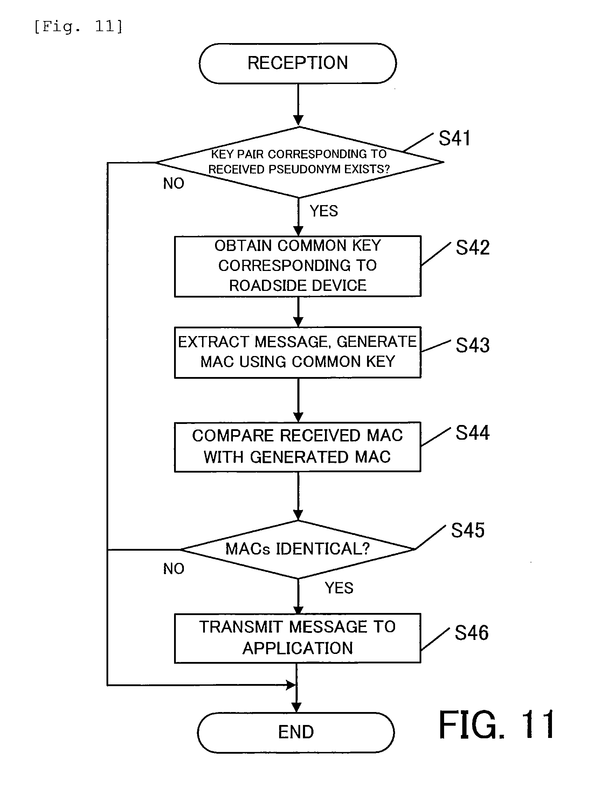

   Fig. 11 is a flowchart showing reception processing performed by the in-vehicle communication device according to the first embodiment;
[FIG. 12]

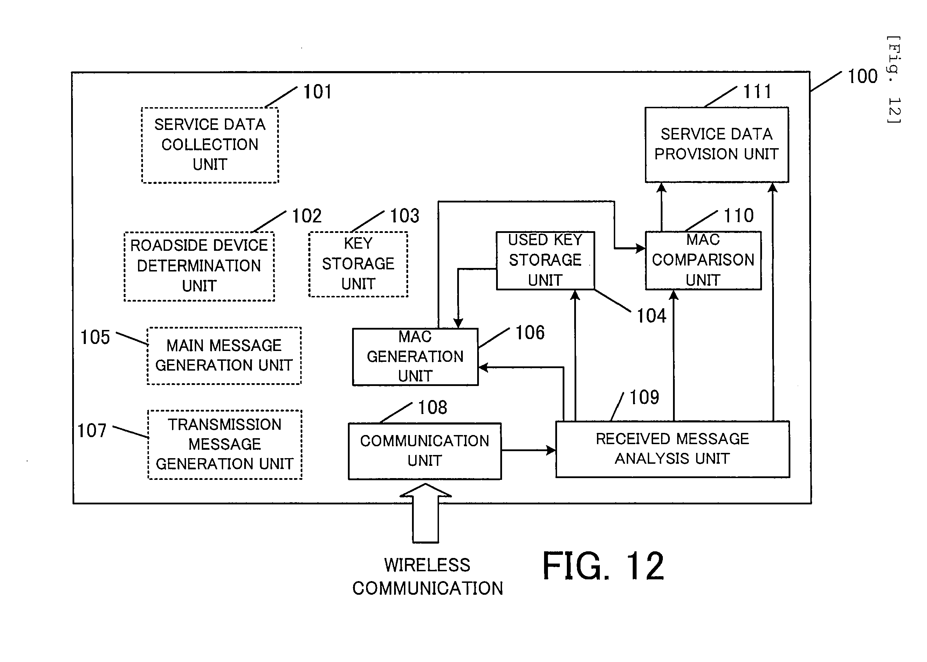

   Fig. 12 is a view showing a flow of reception data in the in-vehicle communication device according to the first embodiment;
[FIG. 13]

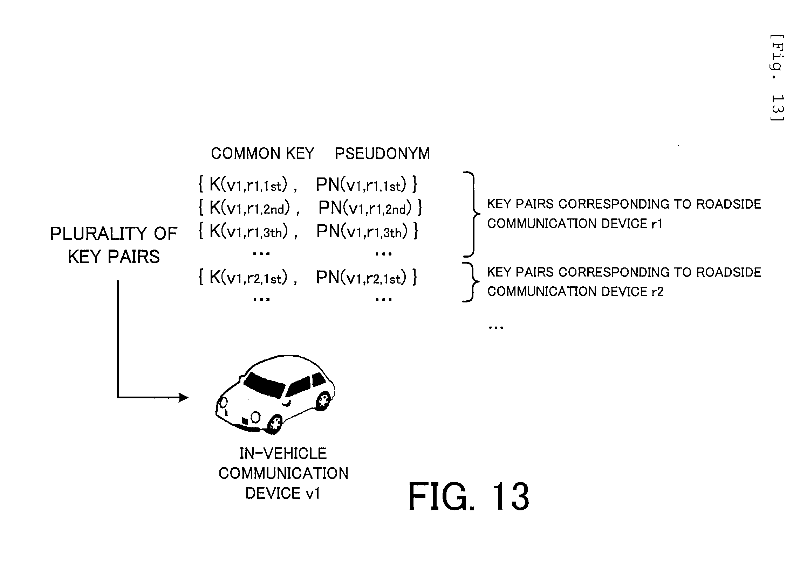

   Fig. 13 is a view illustrating keys held by a vehicle according to a second embodiment;
[FIG. 14]

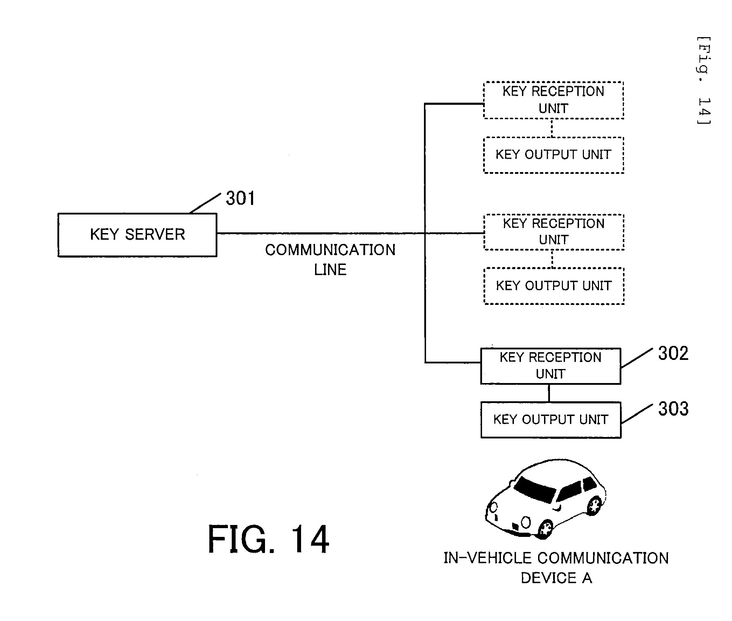

   Fig. 14 is a view showing a system configuration of a key distribution device according to a third embodiment; and
[FIG. 15]

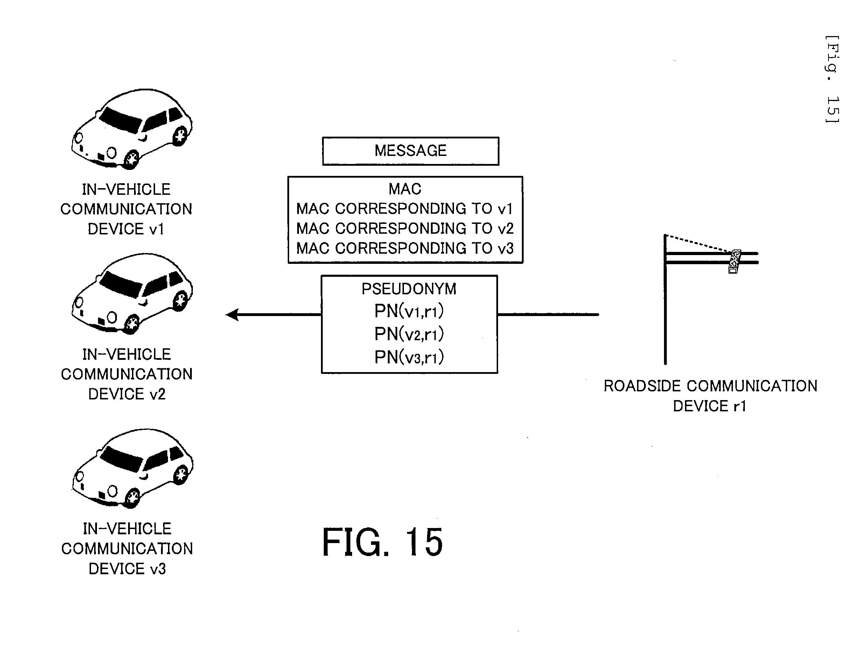

   Fig. 15 is a view illustrating data transmitted between a roadside and a vehicle according to a fourth embodiment.

### [Description of Embodiments]

### (First Embodiment)

### <Outline of message authentication>

A cryptographic communication system according to a first embodiment will now be described briefly. The cryptographic communication system according to the first embodiment is a road-to-vehicle communication system constituted by an in-vehicle communication device and a roadside communication device. The in-vehicle communication device corresponds to a first communication device of the present invention, while the roadside communication device corresponds to a second communication device of the present invention. Fig. 1 is a schematic view showing keys used in the first embodiment. Note that in this embodiment, an example in which message authentication is performed using a transmitted common key will be described, but message encryption may also be performed using the common key.

First, a roadside master key will be described. The roadside master key is an encryption key that is held by the roadside communication device and is unique to each roadside communication device. The roadside master key is attached during manufacture of the device, for example, and is not updated during an operation. The roadside master key corresponds to a master key of the present invention.

Next, a common key will be described. The common key is a key used in common by the in-vehicle communication device and the roadside communication during communication, and is stored in the in-vehicle communication device. A different common key is used for each combination of the in-vehicle communication device and the roadside communication device. The common key corresponds to a first key of the present invention.

The in-vehicle communication device also holds a key obtained by encrypting the common key using a roadside master key corresponding to a communication destination roadside communication device. This key corresponds to a second key (an encrypted common key) of the present invention. In the following description, this key will be referred to as a pseudonym. In other words, the in-vehicle communication device stores a set of the common key and the pseudonym for each roadside communication device with which communication is performed. This set will be referred to hereafter as a key pair.

A method of performing message authentication using a plurality of key pairs and the roadside master key described above will now be described with reference to Fig. 2.

To transmit a communication message, the in-vehicle communication device according to this embodiment simultaneously transmits a message, a MAC (Message Authentication Code), and a pseudonym corresponding to the communication destination roadside communication device. The pseudonym is obtained by encrypting the common key using the roadside master key held by the communication destination roadside communication device, and therefore the roadside communication device can obtain the common key by decrypting the received pseudonym using the roadside master key held thereby. The roadside communication device then generates a verification MAC from the received message and the obtained common key, and compares the verification MAC with the received MAC. When the result indicates a match, the roadside communication device can confirm that the received message is legitimate.

Transmission from the roadside communication device to the in-vehicle communication device is performed similarly. When a message is transmitted from the roadside communication device to the in-vehicle communication device, a MAC is generated using the obtained common key and transmitted at the same time as the message. At this time, the received pseudonym is attached to the message as is and transmitted together therewith. A different pseudonym is used for each combination of the in-vehicle communication device and the roadside communication device, and therefore, by referring to the pseudonym, the in-vehicle communication device can confirm that the received message is addressed thereto and specify the roadside communication device that transmitted the message.

Having received the message, the in-vehicle communication device generates a verification MAC from the received message and the common key corresponding to the received pseudonym, and compares the verification MAC with the received MAC. When the result indicates a match, the in-vehicle communication device can confirm that the received message is legitimate.

### <System configuration of in-vehicle communication device>

A system configuration for realizing the message authentication described above will now be described. Fig. 3 is a view showing a system configuration of the in-vehicle communication device according to the first embodiment, and Fig. 4 is a view showing a system configuration of the roadside communication device according to the first embodiment.

First, constituent elements of an in-vehicle communication device 100 will be described.

A service data collection unit 101 is a unit for receiving a processing request from an in-vehicle application service. The in-vehicle application service is a service operated on a vehicle-installed information terminal or the like to collect information to be provided to a user, such as road information to a destination and nearby traffic information, via the in-vehicle communication device. The service data collection unit receives a processing request transmitted from the service via an in-vehicle network such as a CAN (Controller Area Network).

A roadside device determination unit 102 is a unit for determining a roadside communication device with which to communicate and specifying the common key to be used during communication. The communication subject roadside communication device can be determined from a list on which locations of roadside communication devices are stored and the current position of a host vehicle, obtained from a GPS device, for example. Alternatively, wireless signals of a frequency used during road-to-vehicle communication may be received, and the roadside communication device having the highest signal strength may be determined as the communication subject roadside communication device. As long as the roadside communication device with which to communicate and the common key corresponding to that roadside communication device can be specified, any method may be used.

A key storage unit 103 corresponds to common key storing unit of the present invention, and is a unit for storing the key pair constituted by the common key used during communication and the pseudonym. One key pair is stored for each roadside communication device with which communication is performed.

Further, a used key storage unit 104 is a unit for temporarily storing a key pair corresponding to a roadside communication device that initiates communication. When the in-vehicle communication device receives a message from the roadside communication device, the in-vehicle communication device performs message verification using the key pair stored in the used key storage unit 104. The stored key pair may be deleted when communication has not been performed for a fixed time period, or when a series of communications is terminated.

A main message generation unit 105 is a unit for generating a message to be transmitted to the roadside communication device. For example, when the traffic information service requests information relating to vehicles traveling in the vicinity, the main message generation unit generates a vehicle information request to be transmitted to the roadside communication device.

Further, a MAC generation unit 106 is a unit for generating a MAC from the message and the common key. Various algorithms, such as a hash function algorithm or a block cipher algorithm, may be used to generate the MAC, but as long as the message can be verified using the common key, any algorithm may be employed.

A transmission message generation unit 107 is a unit for generating a communication message by connecting the MAC and the pseudonym to the message to be transmitted to the roadside communication device. Further, a communication unit 108 is a unit for transmitting the generated communication message to the roadside communication device by wireless communication, and receiving a communication message from the roadside communication device.

A received message analysis unit 109 is a unit for obtaining the message, the MAC, and the pseudonym from a communication message received by the communication unit 108. Further, a MAC comparison unit 110 is a unit for outputting a result of a comparison between the MAC received from the roadside communication device and a self-generated MAC used for message verification. When the comparison result indicates a mismatch, it can be determined that the received message is not legitimate.

A service data provision unit 111 is a unit for transmitting the message received from the roadside communication device to the in-vehicle application service. The service data provision unit 111 also has a function for blocking a message for which the MAC comparison unit 110 is unable to confirm a match with the verification MAC.

### <System configuration of roadside communication device>

Next, a configuration of a roadside communication device 200 will be described.

A communication unit 201 is a unit for receiving a communication message from the in-vehicle communication device and transmitting a generated communication message to the in-vehicle communication device. The communication unit 201 functions similarly to the communication unit 108.

A received message analysis unit 202 is a unit for obtaining the message, the MAC, and the pseudonym from a communication message received from the in-vehicle communication device. The received message analysis unit 202 functions similarly to the received message analysis unit 109.

A common key specification unit 203 is a unit for obtaining the common key by decrypting the received pseudonym using the roadside master key, which is stored in a roadside master key storage unit 205. Further, a received key storage unit 204 is a unit for temporarily storing the common key obtained by the common key specification unit 203. When the roadside communication device transmits a message to the in-vehicle communication device, the roadside communication device generates a MAC using the common key stored in the received key storage unit 204. Similarly to the used key storage unit 104, the received key storage unit 204 may delete the stored common key when communication has not been performed for a fixed time period, or when the series of communications is terminated.

The roadside master key storage unit 205 is a unit for storing the roadside master key. A unique roadside master key is stored in each roadside communication device.

A MAC generation unit 206 is a unit for generating a MAC from the message and the common key. The MAC generation unit 206 functions similarly to the MAC generation unit 106. Further, a MAC comparison unit 207 is a unit for outputting a result of a comparison between the MAC received from the in-vehicle communication device and a self-generated MAC used for message verification. The MAC comparison unit 207 functions similarly to the MAC comparison unit 110.

A service data provision unit 208 is a unit for transmitting the message received from the in-vehicle communication device to a roadside application service via a network. The roadside application service is a service operated on a server device (not shown) connected to the roadside communication device to generate information to be provided to the in-vehicle communication device. The service data provision unit 208 also has a function for blocking a message for which the MAC comparison unit 207 is unable to confirm a match with the verification MAC.

A service data collection unit 209 is a unit for receiving a processing request from the roadside application service via the network.

A main message generation unit 210 is a unit for generating a message to be transmitted to the in-vehicle communication device. For example, when the roadside application service requests transmission of vehicle information, the main message generation unit 210 generates a vehicle information message to be transmitted to the in-vehicle communication device.

A transmission message generation unit 211 is a unit for generating a communication message by connecting the MAC and the pseudonym to the message to be transmitted to the in-vehicle communication device. The transmission message generation unit 211 functions similarly to the transmission message generation unit 107.

### <Transmission processing flow of in-vehicle communication device>

Next, a processing flow of the in-vehicle communication device according to the first embodiment will be described. First, transmission processing will be described. Fig. 5 is a processing flowchart illustrating the transmission processing of the in-vehicle communication device, and Fig. 6 is a view illustrating a flow of data during the transmission processing.

When a processing request is issued from an in-vehicle application, the service data collection unit 101 receives the processing request via the network (S11).

Next, the roadside device determination unit 102 determines the roadside communication device with which to communicate (S12). As long as it is possible to specify a roadside communication device with which the in-vehicle communication device can communicate, any method may be used in the processing of step S12. For example, the roadside communication device may be specified from host vehicle position information and map information, or information relating to the roadside communication device may be obtained from a DSRC (Dedicated Short Range Communications) roadside device or the like disposed to transmit traffic information.

Next, the roadside device determination unit 102 obtains the key pair (the common key and the pseudonym) corresponding to the determined roadside communication device from the key storage unit 103 (S13), transmits the pseudonym to the main message generation unit 105, and transmits the common key to the MAC generation unit 106. Further, the key pair is stored in the used key storage unit 104.

Next, the main message generation unit 105 obtains the processing request from the service data collection unit 101, and generates a corresponding message (S14). The main message generation unit 105 transmits the generated message to the MAC generation unit 106, and transmits the pseudonym obtained from the key storage unit 103 together with the generated message to the transmission message generation unit 107.

Next, the MAC generation unit 106 generates a MAC from the obtained common key and message, and transmits the generated MAC to the transmission message generation unit 107 (S15). The transmission message generation unit 107 uses the message and pseudonym received from the main message generation unit 105 and the MAC received from the MAC generation unit 106 to generate a communication message (S16).

The created communication message is transmitted to the communication unit 108 by the transmission message generation unit 107, and then transmitted to the roadside communication device through wireless communication (S17).

### <Reception processing flow of roadside communication device>

Next, a processing flow of the roadside communication device according to the first embodiment will be described. First, reception processing will be described. Fig. 7 is a processing flowchart illustrating the reception processing of the roadside communication device, and Fig. 8 is a view illustrating a flow of data during the reception processing.

When the communication unit 201 receives the communication message from the in-vehicle communication device, the received message analysis unit 202 obtains the message, the MAC, and the pseudonym from the received communication message. The message is transmitted to the service data provision unit 208, but is then held in a standby condition without being transmitted to the roadside application until the processing for verifying the received MAC is complete.

Next, the common key specification unit 203 obtains the roadside master key from the roadside master key storage unit 205, and obtains the common key by decrypting the pseudonym obtained from the communication message using the roadside master key (S21) . The common key specification unit 203 transmits the obtained common key to the MAC generation unit 206, and stores the common key and the pseudonym in the received key storage unit 204.

Next, the MAC generation unit 206 generates a verification MAC from the obtained common key and the received message, and transmits the generated verification MAC to the MAC comparison unit 207 (S22). The MAC comparison unit 207 compares the verification MAC with the received MAC (S23). Here, when the MACs match (S24-Yes), it is understood that the message is legitimate, and therefore the MAC comparison unit 207 informs the service data provision unit 208 thereof and transmits the message to the roadside application (S25). When the MACs do not match (S24-No), it is determined that the message is not legitimate, and the processing is terminated.

### <Transmission processing flow of roadside communication device>

Next, transmission processing of the roadside communication device will be described. Fig. 9 is a processing flowchart illustrating the transmission processing of the roadside communication device, and Fig. 10 is a view illustrating a flow of data during the transmission processing.

When a processing request is issued from the roadside application, the service data collection unit 209 receives the processing request via the network (S31).

Next, the service data collection unit 209 obtains the pseudonym and the common key of the communication subject in-vehicle communication device, which are stored in the received key storage unit 204 (S32), transmits the common key to the MAC generation unit 206, and transmits the common key and the pseudonym to the main message generation unit 210.

Next, the main message generation unit 210 obtains the processing request from the service data collection unit 209, and generates a corresponding transmission message (S33). The main message generation unit 210 transmits the generated message to the MAC generation unit 206, and transmits the pseudonym together with the generated message to the transmission message generation unit 211.

The MAC generation unit 206 generates a MAC from the obtained common key and message (S34), and transmits the generated MAC to the transmission message generation unit 211.

Next, the transmission message generation unit 211 uses the message and the pseudonym received from the main message generation unit 210 and the MAC received from the MAC generation unit 206 to create a communication message (S35).

The created communication message is transmitted to the communication unit 201 from the transmission message generation unit 211, and then transmitted to the in-vehicle communication device through wireless communication (S36).

### <Reception processing flow of in-vehicle communication device>

Next, reception processing of the in-vehicle communication device will be described. Fig. 11 is a processing flowchart illustrating the reception processing of the in-vehicle communication device, and Fig. 12 is a view illustrating a flow of data during the reception processing.

When the communication unit 108 receives the communication message from the roadside communication device, the received message analysis unit 109 obtains the message, the MAC, and the pseudonym from the received communication message. The message is transmitted to the service data provision unit 111, but is then held in a standby condition without being transmitted to the in-vehicle application until the processing for verifying the received MAC is complete.

Next, the received message analysis unit 109 determines whether or not a key pair including the obtained pseudonym is stored in the used key storage unit 104. The used key storage unit 104 stores the key pair corresponding to the roadside communication device with which communication is underway, and therefore, when the pseudonym is transmitted from the roadside communication device with which communication is underway, the corresponding key pair can be obtained (S41-Yes). Accordingly, the common key used for communication can be obtained (S42).

When a key pair including the obtained pseudonym does not exist in the used key storage unit 104 (S41-No), it is understood that the received message is addressed to a different in-vehicle communication device, and therefore the reception operation is terminated. The received message analysis unit 109 transmits the message and the obtained common key to the MAC generation unit 106.

Next, the MAC generation unit 106 generates a verification MAC from the obtained common key and the received message (S43), and transmits the generated verification MAC to the MAC comparison unit 110. The MAC comparison unit 110 compares the verification MAC with the receivedMAC (S44). Here, when the MACs match (S45-Yes), it is understood that the message is legitimate, and therefore the MAC comparison unit 110 informs the service data provision unit 111 thereof and transmits the message to the in-vehicle application (S46). When the MACs do not match (S45-No), it is determined that the message is not legitimate, and the processing is terminated.

According to the embodiment described above, the roadside communication device is able to achieve the object of securely sharing a common key as required with an anonymous communication partner not determined in advance. Further, the in-vehicle communication device can securely share a common key with a plurality of registered communication partners.

In the first embodiment, transmission of the common key is realized by transmitting the pseudonym serving as the encrypted common key. Further, the roadside communication device need only hold a single roadside master key, and management operations such as updating the key corresponding to the in-vehicle communication device externally are not required. Hence, increases in in-vehicle communication devices can be dealt with easily, enabling high operational scalability. Furthermore, the transmitted pseudonym differs according to the combination of the pseudonym and the roadside communication device, making it difficult to specify the key externally.

Moreover, the pseudonym can be used not only to transmit the common key, but also to specify the in-vehicle communication device. In other words, the pseudonym can be used as a message address. The pseudonym is used to specify the in-vehicle communication device serving as the communication partner, but does not include information specifying the identity of the communication partner. In other words, even when communication performed by a certain roadside communication device is intercepted externally, the vehicle serving as the communication partner cannot be specified, and therefore anonymity can be maintained.

### (Second Embodiment)

In the first embodiment, the common key to be used is determined uniquely for each combination of the in-vehicle communication device and the roadside communication device. In a second embodiment, the common key is changed for each communication session of an identical combination of communication devices.

Configurations of the in-vehicle communication device and the roadside communication device other than the key pair stored in the key storage unit 103, and operations other than steps described below, are identical to the first embodiment.

Fig. 13 is a schematic view showing keys used in the second embodiment.

In the second embodiment, a plurality of key pairs are stored in the key storage unit 103 in relation to each combination of the in-vehicle communication device and the roadside communication device. Further, when the key pair is obtained during the processing of step S13, a different key is obtained for each session. In this embodiment, a session may be defined as desired, as long as a series of communications started by the in-vehicle communication device can be delimited. For example, a new session may be started every time the in-vehicle communication device enters a communication range of the roadside communication device, or a new session may be started every time a fixed time period elapses following the start of communication.

According to the second embodiment, a single in-vehicle communication device communicates with a single roadside communication device while switching between a plurality of common keys. The keys are therefore disposable, making it even more difficult to specify a key externally. Further, the pseudonym is modified together with the common key, and therefore even greater anonymity than that of the first embodiment can be secured. Note that Fig. 13 shows an example in which the in-vehicle communication device modifies the used key pair sequentially, but a key pair may be selected at random. Furthermore, when all of the plurality of usable key pairs have been used, a key pair used in the past may be reused.

### (Third Embodiment)

In a third embodiment, a key distribution device that distributes key pairs to the in-vehicle communication device according to the first and second embodiments is added to the system. Fig. 14 is a view illustrating a relationship between the key distribution device and the in-vehicle communication device. Configurations of the in-vehicle communication device and the roadside communication device other than the key distribution device are identical to the first embodiment.

A method of distributing keys to the in-vehicle communication device will now be described.

The key distribution device according to this embodiment is a device for managing keys to be distributed to the in-vehicle communication device, and distributing the keys. The key distribution device is constituted by a key server 301, a plurality of key reception units 302, and a plurality of key output units 303.

The key server 301 is a computer that manages the keys to be distributed, and holds all of the key pairs to be distributed to the in-vehicle communication device. The key reception unit 302 is a unit for receiving and temporarily storing a key from the key server. The key output unit 303 is an interface for connecting the in-vehicle communication device to the key reception unit 302 either wirelessly or via a wire. The key reception unit 302 and the key output unit 303 are preferably provided in a facility used periodically by the vehicle, such as a gas station or a vehicle inspection station.

When the in-vehicle communication device becomes capable of communication with the key output unit 303, the in-vehicle communication device obtains a key pair from the key reception unit 302 and writes the obtained key pair to the key storage unit 103.

With this configuration, the in-vehicle communication device can obtain and update the key pair corresponding to the roadside communication device with which communication is to be performed.

Further, a fast charging connector used by an electric automobile includes a terminal that can access the in-vehicle network with the aim of controlling a charging current, and this terminal may therefore be used to transmit the key pair. Hence, by annexing the key reception unit 302 and the key output unit 303 to a charging station, the in-vehicle communication device can update the key pair every time the user charges the vehicle.

Note that the key pairs transmitted to the key reception unit 302 from the key server 301 may be set to include only key pairs corresponding to roadside communication devices existing within a predetermined distance of a location in which the keys are distributed to the in-vehicle communication device. For example, when key distribution is performed at a charging station, a volume of the distributed key pairs can be suppressed by distributing only keys corresponding to roadside communication devices existing within a maximum travel range of the electric automobile, and as a result, the time required for an update can be shortened.

Further, the key reception unit 302 and the key output unit 303 need not be fixed facilities, and may, for example, be constituted by a communication device that is installed in the vehicle and receives keys via a portable telephone network or the like.

### (Fourth Embodiment)

In the first embodiment, the roadside communication device transmits the MAC and the pseudonym corresponding to a specific in-vehicle communication device, and therefore communication cannot be performed with a plurality of in-vehicle communication devices. In a fourth embodiment, on the other hand, multicast communication is performed from the roadside communication device to the in-vehicle communication device.

Fig. 15 is a schematic view illustrating an embodiment in which the roadside communication device transmits a message simultaneously to three in-vehicle communication devices. Operations of the respective communication devices will be described below. Note that operations other than steps described below, as well as the configurations of the devices, are identical to the first embodiment.

When a plurality of communication destination in-vehicle communication devices are indicated by the roadside application in step S31, the roadside communication device connects a corresponding'plurality of pseudonyms when generating the communication message (S35). Further, the roadside communication device generates and connects a corresponding plurality of MACs (S34).

When, in the processing of step S41, the received message includes a plurality of pseudonyms, the in-vehicle communication device attempts to obtain the corresponding key pair from all of the pseudonyms. When the in-vehicle communication device is able to obtain a key pair corresponding to one of the pseudonyms, it is determined that the in-vehicle communication device is included in the address, and the processing is continued. Furthermore, when, in the processing of steps S44 and S45, the generated MAC matches one of the plurality of received MACs, it is determined that the message is legitimate. When the in-vehicle communication device cannot find a corresponding key pair in relation to any of the received pseudonyms, it is determined that the message is not addressed to the in-vehicle communication device, and the reception operation is terminated.

With this configuration, multicast communication can be performed from the roadside communication device to the in-vehicle communication device.

Note that when the number of transmission destination in-vehicle communication devices increases, the number of pseudonyms transmitted from the roadside communication device increases, and as a result, a proportion of a transmission line capacity that can be used for message transmission may decrease. To avoid this problem, processing may be performed to shorten the length of the pseudonyms. This processing may be any processing with which the length can be shortened, such as using only several lead bytes of the original pseudonym as the pseudonym or using a hash generated from the original pseudonym as the pseudonym, for example.

When the length of the pseudonym is shortened, on the other hand, the pseudonym may overlap that of another device. However, the in-vehi.cle communication device performs message verification using the MAC, and therefore erroneous determinations such as erroneously recognizing a message addressed to another device as a message addressed to oneself do not occur.

### (Modified examples)

Note that the description of the above embodiments is merely an example for illustrating the present invention, and the present invention may be implemented by appropriately modifying or combining the embodiments within a scope that does not depart from the spirit of the invention.

For example, in the description of the embodiments, a road-to-vehicle communication system is cited as an example, but the cryptographic communication system according to the present invention is not limited to a road-to-vehicle communication system, and may be any system in which communication devices communicate with each other. For example, the present invention may be applied to a moving body communication system in which at least one of two communication devices moves.

Further, in the description of the embodiments, different common keys are used for all combinations of the in-vehicle communication device and the roadside communication device, but an identical common key may be used instead. Even when an identical common key is used, the effects of the present invention can be obtained.

Furthermore, in the description of the embodiments, the roadside application service provides information in response to a request from the in-vehicle application service, but information does not necessarily have to be provided. For example, the in-vehicle application service may transmit a message indicating transit of a fixed route bus or an emergency vehicle, and the roadside application service may perform priority control on a traffic light.

Moreover, in the description of the embodiments, an example in which the respective communication devices perform message authentication using the transmitted common key was described, but instead, a message may be encrypted using the common key. As a result, in addition to confirming the legitimacy of the message, the entire content of the communication can be made confidential.

### [Reference Signs]

100 in-vehicle communication device
200 roadside communication device
101, 209 service data collection unit
102 roadside device determination unit
103 key storage unit
104 used key storage unit
105, 210 main message generation unit
106, 206 MAC generation unit
107, 211 transmission message generation unit
108, 201 communication unit
109, 202 received message analysis unit
110, 207 MAC comparison unit
111, 208 service data provision unit
203 common key specification unit
204 received key storage unit
205 roadside master key storage unit

## Claims

1. A cryptographic communication system constituted by a first communication device, and a second communication device that stores a master key serving as an encryption key,
the cryptographic communication system being **characterized in that**
said first communication device has a common key storing unit configured to store a key pair constituted by a first key serving as a common key used to communicate with said second communication device and a second key obtained by encrypting said first key by using said master key held by said second communication device, and also has a common key transmitting unit configured to transmit said second key to said second communication device, and
said second communication device has common key obtaining unit configured to receive said second key and obtaining said first key by decrypting said received second key by using said master key.

2. The cryptographic communication system according to claim 1, **characterized in that**
said common key storing unit stores a plurality of said key pairs in relation to said second communication device, and
during communication with said second communication device, said common key transmitting unit transmits a different second key for each communication session.

3. The cryptographic communication system according to claim 1 or 2, further comprising
a key distribution device that transmits said key pair corresponding to said second communication device to said first communication device,
said key distribution device transmitting said key pair corresponding to a second communication device existing within a predetermined distance from a location in which said first communication device receives said key pair.

4. The cryptographic communication system according to any of claims 1 to 3, **characterized by** being constituted by a plurality of said first communication devices and a plurality of said second communication devices,
said master key being different for each second communication device, and
said key pair being different for each combination of said first communication device and said second communication device that communicate with each other.

5. The cryptographic communication system according to claim 4, **characterized in that**
said second communication device transmits said second key to said first communication device together with a transmission message, and
said first communication device receives said message when said received second key is stored in said common key storing unit.

6. The cryptographic communication system according to any of claims 1 to 5, **characterized in that** said first communication device and said second communication device perform message authentication using said first key.

7. The cryptographic communication system according to any of claims 1 to 6, **characterized in that**
said first communication device is an in-vehicle communication device, and
said second communication device is a roadside communication device.

8. A communication device comprising:
a common key storing unit configured to store a common key used to communicate with another communication device, and an encrypted common key obtained by encrypting said common key by using an encryption key held by said other communication device; and
a common key transmitting unit configured to transmit said encrypted common key to another communication device serving as a communication destination.

9. A communication device that stores a master key serving as an encryption key, comprising a common key obtaining unit configured to receive, from another communication device serving as a communication destination, an encrypted common key generated by encrypting a common key used during communication by using said master key, and obtaining said common key by decrypting said received encrypted common key by using said master key.

10. A key distribution device comprising:
a key pair distributing unit configured to transmit, to a first communication device, a key pair constituted by a first key, which is a common key used by said first communication device to communicate with a second communication device, and a second key obtained by encrypting said first key by using a master key held by said second communication device,
said key pair distributing unit transmits said key pair corresponding to a second communication devices existing within a predetermined distance from a location in which said first communication device receives said key pair.

11. A cryptographic communication method implemented in a communication system constituted by a first communication device and a second communication device that stores a master key serving as an encryption key,
the method comprising:
a step of operating said first communication device to store a first key serving as a common key used to communicate with said second communication device and a second key obtained by encrypting said first key by using said master key held by a second communication device serving as a communication destination;
a step of operating said first communication device to transmit said second key to said second communication device; and
a step of operating said second communication device to receive said second key and obtain said first key by decrypting said received second key by using said master key.
